**Europäisches Patentamt**

**European Patent Office**

**Office européen des brevets**

(11) Veröffentlichungsnummer: **0 236 870**
**A2**

## (12) EUROPÄISCHE PATENTANMELDUNG

(21) Anmeldenummer: **87102768.6**

(22) Anmeldetag: **26.02.87**

(51) Int. Cl.4: **B27G 5/02 , B27M 3/18**

(30) Priorität: **04.03.86 DE 3606995**

(43) Veröffentlichungstag der Anmeldung:
**16.09.87 Patentblatt 87/38**

(84) Benannte Vertragsstaaten:
**AT DE FR GB IT**

(71) Anmelder: **Fromm, Ferdinand**
**Endersbacher Strasse 16B**
**D-7000 Stuttgart 50(DE)**

(72) Erfinder: **Fromm, Ferdinand**
**Endersbacher Strasse 16B**
**D-7000 Stuttgart 50(DE)**

(74) Vertreter: **Dreiss, Hosenthien & Fuhlendorf**
**Gerokstrasse 6**
**D-7000 Stuttgart 1(DE)**

(54) **Vorrichtung zur Herstellung exakter Gehrungszuschnitte.**

(57) Bei einer Vorrichtung und einem Verfahren zur Herstellung exakter Gehrungszuschnitte zum Einpassen einer ersten Randleiste (6) zwischen zwei in einem Winkel verlaufenden, vorzugsweise bereits an einer Platte (3) befestigten weiteren Randleisten (4, 4'), wird zum exakten automatischen Toleraanzausgleich vorgeschlagen, daß der Abstand zwischen den beiden weiteren Randleisten (4, 4') zwischen denen die erste Randleiste (6) eingepasst werden soll, abgegriffen und der Abgriff zugleich zur Abstandseinstellung von zwei Gehrungsschnittsägen - (19, 19') dient und dazu die Platte (3) mit der oder den weiteren Randleisten (4, 4') aufgespannt und das überstehende Ende einer Randleiste (4) und der Plattenrand (5) an dem die zuzuschneidende Randleiste (6) eingepasst werden soll, jeweils an einem festen Anschlag (15, 15', 16) der Vorrichtung angelegt und dann festgespannt werden, daß dann die Eckkante (24') des Plattenrands (5) der weiteren Randleiste (4') direkt oder über die andere überstehende Randleiste (4') durch Verstellen des Abstands der zweiten Gehrungsschnittsäge (19') zur ersten Gehrungsschnittsäge (19) eingestellt wird, daß die einzupassende Randleiste (6) parallel über der Platte (3) angeordnet wird, wobei der Plattenrand (5) und die mit dem Plattenrand (5) zu verbindende Fläche (10) der einzupassende Randleiste (6) parallel übereinander aber entsprechend der Sägblattdicke und unter Berücksichtigung der Gehrungswinkel um einen entsprechenden Abstand (14)

nach außen versetzt über mindestens zwei entsprechende einstellbare Anschläge (11, 11', 11") eingespannt und durch eine Hubbewegung der beiden Gehrungsschnittsägen (19, 19') alle Ende der zugeordneten Randleisten (4, 4', 6) in einem Zuge auf Gehrung geschnitten werden.

Fig 1

## Vorrichtung zur Herstellung exakter Gehrungszuschnitte

Die Erfindung betrifft eine Vorrichtung zum Gehrungssägen mit einem Auflagetisch für ein Werkstück (Randleiste, Platte), mindestens einem Leistenanschlag, mindestens einer Einspannvorrichtung und mindestens zwei im Abstand und im Winkel zueinander einstellbaren Gehrungsschnittsägen, die über jeweils eine Hubvorrichtung senkrecht zum Auflagetisch verschiebbar angeordnet sind.

Zur Herstellung von randgeschützten Platten, insbesondere Tischplatten ist es bekannt, die am Außenrand der Platte flächenbündig anzuleimenden Randleisten auf Gehrung passende zuzuschneiden und dann anzuleimen. Bei Maßtoleranzen kann es dann passieren, daß die letzte einzupassende Randleiste, wenn sie etwas zu lang ist, nicht vollständig am Plattenrand anliegt. Bei zu kurzer Randleiste klafft zwischen den beiden aneinander anstoßenden Randleisten ein Zwischenraum der störend ist. Bei einer Vorrichtung nach dem deutschen Gebrauchsmuster 16 95 544 können Leisten beidseitig exakt auf Gehrung geschnitten werden. Eine exakte Einpassung der letzten Leiste bei einer Plattenumrandung ist aber hier nicht ohne weiteres gewährleistet und ist abhängig von dem exakten Arbeiten der Bedienungsperson.

Aus der US-PS 3,342,227 ist weiter eine kompliziert aufgebaute und zu handhabende Vorrichtung bekannt, bei der Außenrahmen für Türen und Berücksichtigung des erforderlichen Randabstands auf Gehrung geschnitten werden können. Das Anlegen und Handhaben dieser Vorrichtung an die Tür und die Anpassung der Leisten ist äußerst umständlich.

In Vermeidung der geschilderten Nachteile liegt der vorliegenden Erfindung die Aufgabe zugrunde, eine Vorrichtung der eingangs beschriebenen Art so zu verbessern, daß die Randleisten exakt auf Gehrung geschnitten an den Außenumfang der Platte angepaßt werden können.

Zur Lösung dieser Aufgabe sieht die Erfindung vor, daß der Auflagetisch für eine Platte mindestens einen Anschlag für einen Plattenrand und weiter mindestens den Leistenanschlag für eine an der Platte befestigte über eine Eckkante der Platte vorstehende, auf Gehrung zu schneidende Leiste aufweist, daß ein Abstandsabgriff für eine weitere an der Platte angeordnete Randleiste und/oder Eckkante der Platte vorgesehen ist, daß dieser Abstandsabgriff parallel zum Plattenrand bis zum Fluchten mit der Eckkante der weiteren an der Platte angeordneten Randleiste oder Eckkante der Platte verschiebbar ist, daß ferner eine zum Auflagetisch und dem Plattenrand parallele Einspannvorrichtung für die einzupassende erste Randleiste über oder unter dem Auflagetisch vorgesehen ist, daß durch diese Einspannvorrichtung diese erste Randleiste durch mindestens zwei Anschläge parallel einstellbar um einen von den Sägblattdicken und den Gehrungswinkeln abhängigen Abstand vor dem Plattenrand über oder unter diesem gehalten ist, daß ferner die erste der Gehrungsschnittsägen so gegenüber der Hubvorrichtung einstellbar angeordnet ist, daß die äußere Schnittkante fluchtend zur einen der Eckkante der Platte der Randleiste verläuft und die äußere Schnittkante der parallel mit dem Abstandsabgriff verschiebbaren zweiten Gehrungsschnittsäge durch diese verschiebbar ebenfalls fluchtend mit der anderen Eckkante der Platte ausgerichtet ist.

In besonders vorteilhafter Weise kann der Abstandsabgriff einen mit einem Mikroschalter zusammenwirkenden Anschlag aufweisen. Über den Mikroschalter kann dann, falls dies gewünscht wird, automatisch der Sägevorgang eingeleitet werden. Anstelle des Mikroschalters kann auch eine Fotozelle, ein sonstiger Taster oder Endschalter dienen, durch den der Sägevorgang oder die optische und/oder akustische Anzeige ausgelöst werden, wenn eine maßgenaue Einstellung erreicht ist.

In vorteilhafter Weise kann der Anschlag parallel entlang dem Plattenrand verschiebbar sein und eine messerkantenartige Fühlkante aufweisen, die am Plattenrand entlanggeführt wird, bis zum Abgriff der Eckkante der Platte. Diese Ausbildung ist insbesondere für die Anbringung von Randleisten an vielkantigen bspw. sechskantigen, achtkantigen oder auch unregelmäßig geformten Platten exakt möglich.

Konstruktiv besonders einfach kann der Abstandsangriff und die zugeordnete zweite Gehrungsschnittsäge auf einem am Auflagetisch parallel zur Platte verschiebbaren Grundschlitten angeordnet sein, wobei dieser Grundschlitten über einen Antrieb vorzugsweise eine Gewindespindel, Zahnstange, Kette oder Seiltrieb verschiebbar sein kann. Dabei kann der Grundschlitten auf zwei zwischen Trägerplatten angeordneten Führungsstangen exakt mit geringem Konstruktionsgewicht und geringem Bearbeitungsaufwand geführt sein.

Um möglichst viele gleiche Teile für die Vorrichtung zu erhalten kann auf dem Grundschlitten ein senkrecht zum Auflagetisch bzw. der Platte über eine Hubvorrichtung bewegbarer Trägerschlitten vorgesehen sein, der die zugeordnete zweite Gehrungsschnittsäge trägt. Dabei können dann die Hubvorrichtung und der Trägerschlitten für die erste und zweite Gehrungsschnittsäge weitgehend identisch zumindest aber spiegelbildlich ausgebildet sein, so daß wenige Herstellvorrichtungen ausreichen.

Material-und platzsparend kann die Einspannvorrichtung für die einzupassende erste Randleiste aus zwei Pratzen bestehen, durch die die einzuspannende erste Randleiste gegen jeweils den zugeordneten Anschlag pressbar ist, wobei jeweils der Anschlag und die Pratze auf einer Konsole angeordnet sind, die auch jeweils eine Auflagefläche für die erste Randleiste aufweisen. Um ein Durchbiegen und Schwingen beim Sägen möglichst zu vermeiden, können die zwei Pratzen und die sie tragenden Konsolen der Einspannvorrichtung nahe bei den Eckkanten der Platte vorgesehen sein und es kann ggf. etwa in der Mitte dazwischen eine weitere Pratze vorgesehen sein mit einem zu dem beiden anderen Anschlägen fluchtenden weiteren Anschlag, was insbesondere bei größeren Plattenbereichen oder zu durch Krümmungen niegenden Randleisten zweckmäßig ist. Vorteilhaft kann hier die weitere Pratze mit dem weiteren Anschlag und ihrer weiteren Auflagefläche für die erste Randleiste von einer Zwischenkonsole getragen sein, die verschieb-und abnehmbar auf den Führungsstangen für den Grundschlitten angeordnet sein kann um so exakte Bezugsflächen und damit eine hohe Herstellunggenauigkeit bei geringem Aufwand zu erhalten.

Selbstverständlich können die Gehrungswinkel der Gehrungsschnittsägen einstellbar sein, bspw. für die exakte Einpassung unterschiedlich dicker Randleisten oder zur Anbringung von Randleisten an Vieleckplatten. In Abhängigkeit vom Gehrungswinkel und der Dicke der Sägeblätter kann auch der Abstand der Anordnung der ersten Randleiste über dem Plattenrand der Platte einstellbar sein.

Weiter erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1 eine Teilansicht einer Sägevorrichtung,

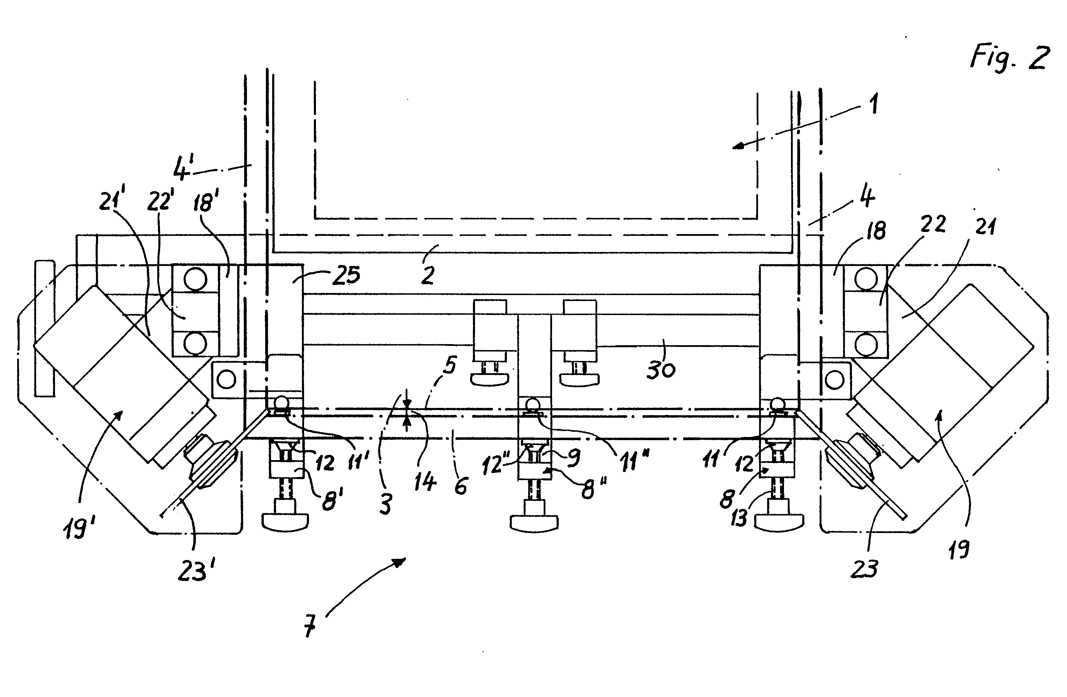

Figur 2 eine Teildraufsicht auf die in Fig. 1 dargestellte Sägevorrichtung des Pfeils II,

Figur 3 eine vereinfachte Teildraufsicht auf die die Eckbereiche der Platte in größerem Maßstab,

Figur 4 eine entsprechende Draufsicht auf die Einspannvorrichtung mit strichpunktiert dargestellter einzupassender Randleiste,

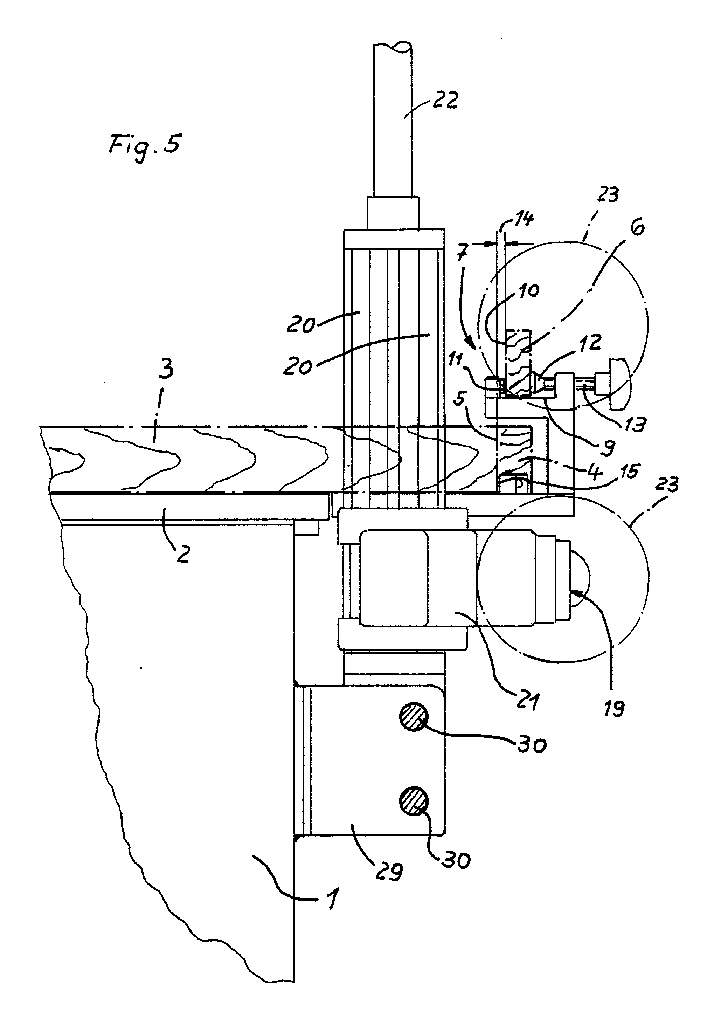

Figur 5 eine Teilseitenansicht der Sägevorrichtung in Richtung des Pfeils V in Fig. 1, in etwas größerem Maßstab und

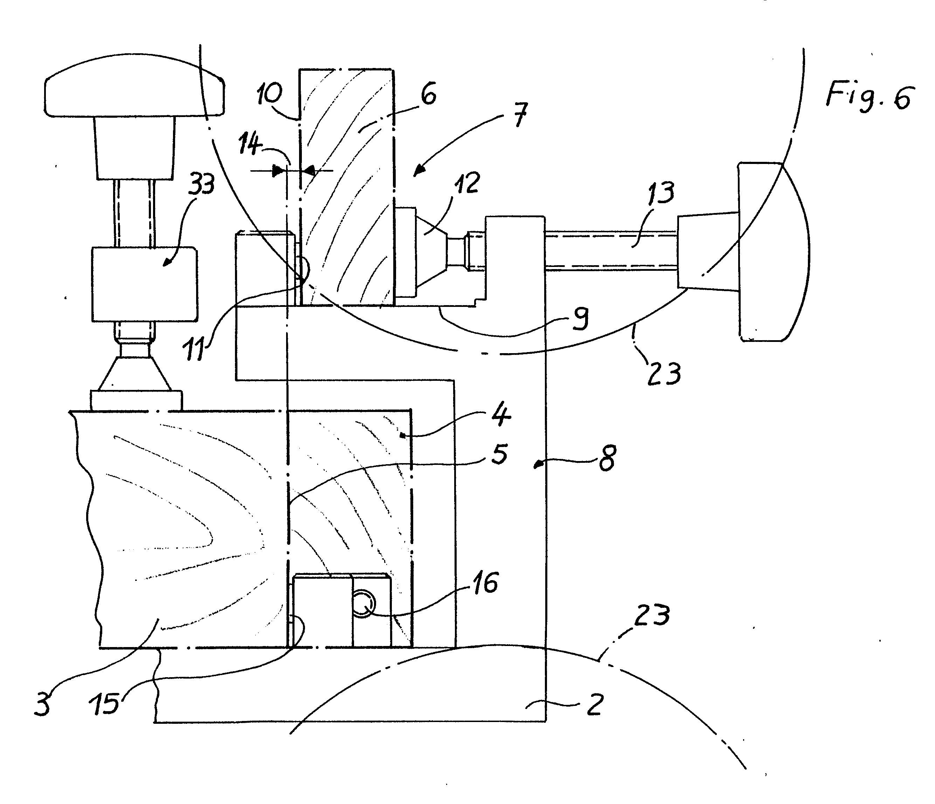

Figur 6 einen Teilausschnitt der Einspannvorrichtung für die erste Randleiste in Richtung des Pfeils VI in Fig. 1 in größerem Maßstab.

Ein Maschinengestell 1 trägt auf der Oberseite einen horizontalen Auflagetisch 2 für eine Platte 3, vorzugsweise aus Holz, die im dargestellten Ausführungsbeispiel bereits mindestens auf zwei gegenüberliegenden Seiten jeweils mit einer Randleiste 4, 4' verleimt ist und die Enden dieser Randleisten 4, 4' stehen über den Plattenrand 5 vor und sollen auf Gehrung geschnitten werden unter exakter Einpassung einer ersten Randleiste 6, die hierzu in einer Einspannvorrichtung 7 über der Platte 3 eingespannt ist.

Die Einspannvorrichtung 7 besteht aus zwei am Maschinengestell 1 befestigten Konsolen 8, 8', die den Plattenrand 5 umgreifend über der Platte 3 jeweils eine Auflagefläche 9 für die erste Randleiste 6 aufweisen und deren später mit dem Plattenrand 5 zu verleimende Fläche 10 an Anschlägen 11, 11' über Pratzen 12, 12' mittels Spannschrauben 13, 13' angepresst wird. Die Konsole 8, 8' sind ziemlich am Ende der ersten Randleiste 6 angeordnet.

Bei längeren Randleisten 6 ist zwischen den Konsolen 8, 8' eine Zwischenkonsole 8" angeordnet, die entsprechend ebenfalls einen Anschlag 11", eine Pratze 12" und eine Spannschraube 13" aufweist und ebenso eine Auflagefläche 9. Die Anschläge 11, 11', 11" sind gegenüber dem Plattenrand 5 parallel einstellbar, wobei die Fläche des Plattenrands 5 gegenüber der zu verleimenden Fläche 10 der ersten Randleiste 6 in horizontaler Richtung um einen Abstand 14 versetzt ist, der vom Gehrungswinkel und der Dicke der verwendeten Säge abhängig ist.

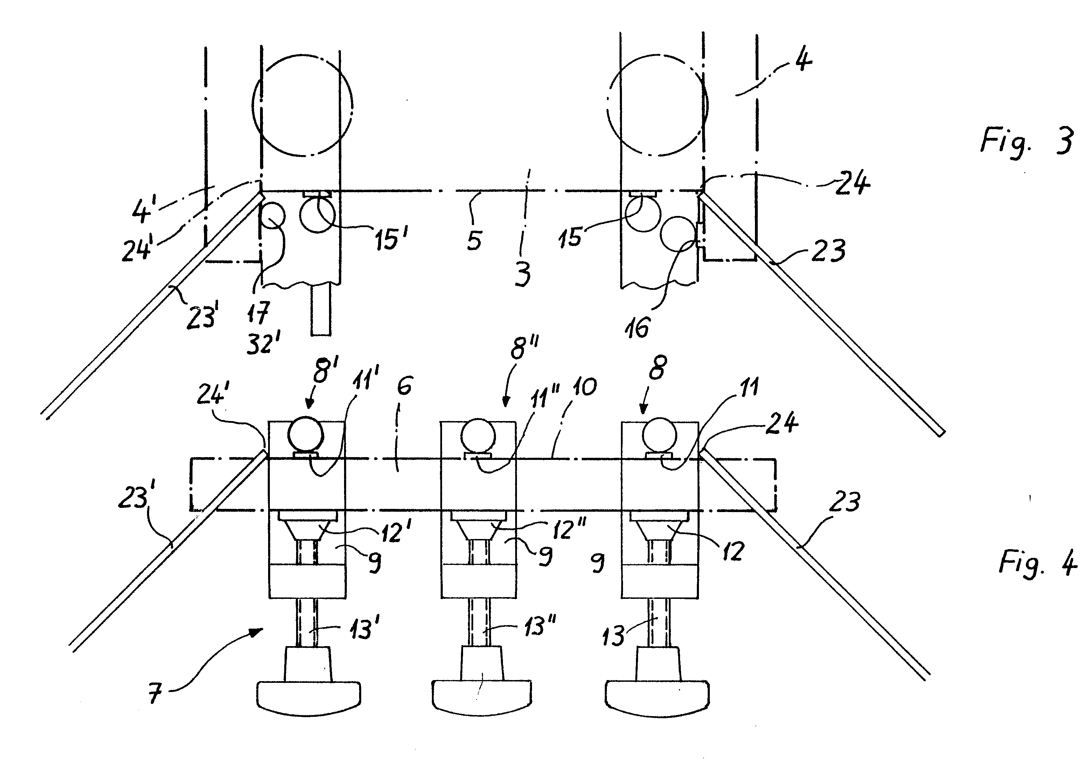

Am Auflagetisch 1 sind weiter zwei ebenfalls einstellbare Anschläge 15, 15' für den Plattenrand 5 der Platte 3 und ein Leistenanschlag 16 für die Randleiste 4 angeordnet, wie dies insbesondere aus Fig. 3 ersichtlich ist. Weiter ist noch ein nachgeführter Anschlag 17 vorgesehen, der zur Anlage an der Innenseite der Randleiste 4' verschoben werden kann. Dieser nachgeführte Anschlag 17 wirkt mit einem nicht mehr dargestellten Mikroschalter zusammen, der nach erfolgter Anlage des Anschlags 17 an der Randleiste 4' einen Schaltkontakt und damit bspw. eine optische und/oder akustische Anzeige auslöst oder -wie später beschrieben auf eine Maschinensteuerung einwirkt.

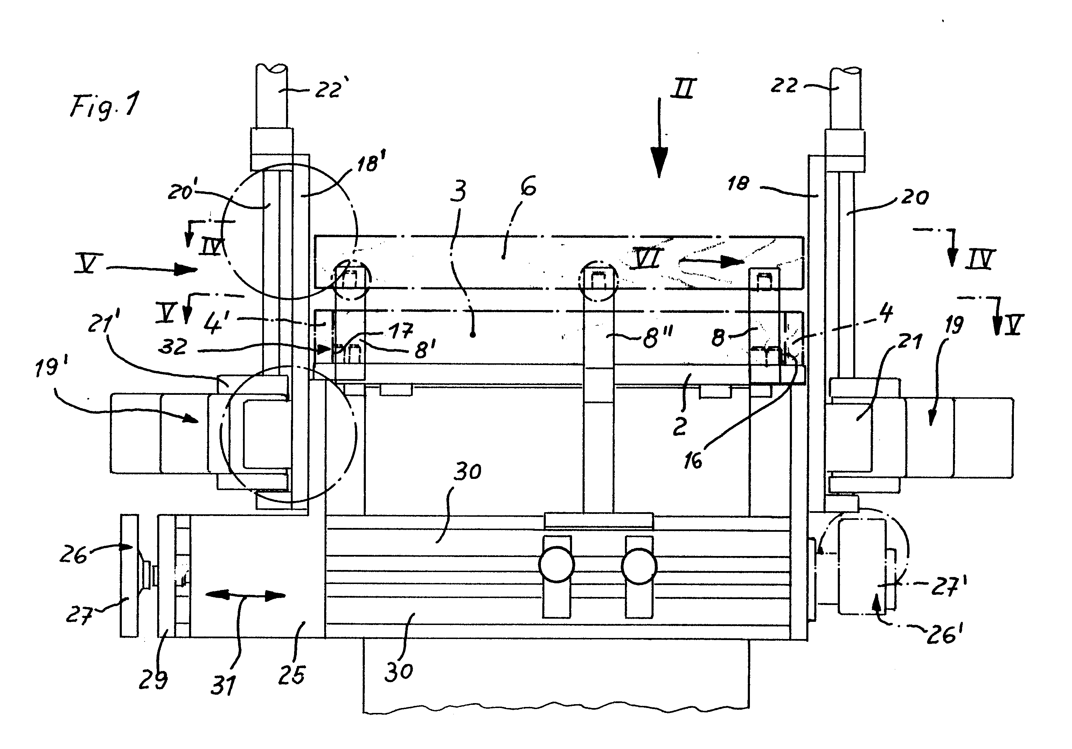

Auf einer Seite am Maschinengestellt 1 ist an einer Halteplatte 18 eine erste Gehrungsschnittsäge 19 angeordnet und über zwei Führungsstangen 20 über einen Trägerschlitten 21 in vertikaler Richtung über eine Hubvorrichtung in Form eines Hubzylinders vertikal verschiebbar. In Fig. 1 sind in schematischer Weise die Endlagen des Sägblatts 23 strichpunktiert eingezeichnet. Die Lage des Sägblatts gegenüber der Platte 3 und den Randleisten 4, 4', 6 ist insbesondere aus den Fig. 3 und 4 ersichtlich. Bei rechteckigen Platten 3 und gleich dicken Randleisten 4, 4', 6 beträgt der Gehrungswinkel der Gehrungssäge 19 exakt 45°. Bei unterschiedlich dicken Randleisten 4, 4' bzw. 6 oder anderen Eckwinkeln der Platte 3, wenn diese bspw. sechseckig, achteckig oder irgendwie anders polygon ausgebildet sind muß ein angepaßter Gehrungswinkel eingestellt werden.

Die vertikal fluchtende äußere Eckkante 24 des Plattenrands 5 am Stoß mit der Randleist 5 fluchtet in vertikaler Richtung mit der äußeren Sägekante des Sägblatts 23, wie dies in den Fig. 3 und 4 dargestellt ist.

Entsprechend symmetrisch ist auch auf der anderen Eckseite eine zweite Gehrungsschnittsäge 19' an einer Halteplatte 18' entsprechend vertikal verschiebbar angeordnet. Die Halteplatte 18' selbst ist aber an einem Grundschlitten 25 befestigt, der zusammen mit der zweiten Gehrungsschnittsäge 19' parallel zum Plattenrand 5 über einen Antrieb 26 mittels Handverstellung 27 über eine Gewindespindel 28 verstellbar ist. Die Verstellung kann wie auf der rechten Seite strichpunktiert in Fig. 1 dargestellt auch über einen Antrieb 26 mittels eines Stellmotors 27' erfolgen bspw. ebenfalls über eine nicht dargestellte Gewindespindel oder auch über einen Ketten-oder Seilantrieb. Der Grundschlitten 25 selbst ist auf horizontalen zwischen Trägerplatten 29, 29' gehaltenen Führungsstangen 30 in Richtung des Doppelpfeils 31 durch den Antrieb 26 bzw. 26' verschiebbar und damit auch die zweite Gehrungsschnittsäge 19' und der damit gekoppelte Anschlag 17. Beim Anliegen des Anschlags 17 an der Eckkante 24' zwischen dem Plattenrand 5 und der Randleiste 4' erfolgt, wie weiter oben beschrieben, durch einen Mikroschalter ein optisches oder akustiches Signal oder bei Verstellung des Grundschlittens 25 über den Stellmotor 27 wird der Stellmotor 27 stillgesetzt und es kann dann entweder automatisch oder durch eine Handauslösung über die Hubvorrichtung 22, 22' der eigentliche Gehrungsschnitt durchgeführt werden, durch Hochfahren der beiden Gehrungsschnittsägen 19, 19'. Dabei ist der Gehrungswinkel des Sägblatts 23' entsprechend eingestellt.

Durch die entsprechende Anordnung dient der nachgeführte Anschlag 17 als Abstandsabgriff 32 des Abstands zwischen den Eckkanten 24, 24' der Randleisten 4, 4' im Bereich des Plattenrands 5.

Die weitere Konsole 8" ist, wie aus Fig. 1 ersichtlich, an den Führungsstangen 30 für den Grundschlitten 25 befestigt und kann ggf. in Richtung des Doppelpfeils 32 verschoben oder auch bei der Bearbeitung von schmalen Platten 3 ganz entfernt werden, wenn keine Gefahr für die Durchbiegung der ersten Randleiste 6 besteht. Selbstverständlich muß die Platte 3 nach Anliegen an den Anschlägen 15, 15' und 16 durch eine Plattenspannvorrichtung 33 auf dem Auflagetisch 2 festgespannt werden.

## Ansprüche

1. Vorrichtung zum Gehrungssägen mit einem Auflagetisch (2) für ein Werkstück (Randleiste 4, 4', Platte 3), mindestens einem Leistenanschlag (16), mindestens einer Einspannvorrichtung (7, 33) und mindestens zwei im Abstand und im Winkel zueinander einstellbaren Gehrungsschnittsägen (19, 19'), die über jeweils eine Hubvorrichtung (22, 22') senkrecht zum Auflagetisch (2) verschiebbar angeordnet sind, **dadurch gekennzeichnet,** daß der Auflagetisch (2) für eine Platte (3) mindestens einen Anschlag (15, 15') für einen Plattenrand (5) und weiter mindestens den Leistenanschlag (16) für eine an der Platte (3) befestigte über eine Eckkante (24) der Platte (3) vorstehende, auf Gehrung zu - schneidende Leiste (4) aufweist, daß ein Abstandsabgriff (23) für eine weitere an der Platte (3) angeordnete Randleiste (4') und/oder Eckkante - (24') der Platte (3) vorgesehen ist, daß dieser Abstandsabgriff (32) parallel zum Plattenrand (5) bis zum Fluchten mit der Eckkante (24') der weiteren an der Platte (3) angeordneten Randleiste (4') oder Eckkante (24') der Platte (3) verschiebbar ist, daß ferner eine zum Auflagetisch (2) und dem Plattenrand (5) parallele Einspannvorrichtung (7) für die einzupassende erste Randleiste (6) über oder unter dem Auflagetisch (2) vorgesehen ist, daß durch diese Einspannvorrichtung (7) diese erste Randleiste (6) durch mindestens zwei Anschläge (11, 11', 11") parallel einstellbar um einen von den Sägblattdicken und den Gehrungswinkeln abhängigen Abstand (14) vor dem Plattenrand (5) über oder unter diesem gehalten ist, daß ferner die erste der Gehrungsschnittsägen (19) so gegenüber der Hubvorrichtung (22) einstellbar angeordnet ist, daß die äußere Schnittkante (25) fluchtend zur einen der Eckkante (24) der Platte (3) der Randleiste - (4) verläuft und die äußere Schnittkante (24') der parallel mit dem Abstandsabgriff (32) verschiebbarenen zweiten Gehrungsschnittsäge (19') durch diese verschiebbar ebenfalls fluchtend mit der anderen Eckkante (24') der Platte (3) ausgerichtet ist.

2. Vorrichtung nach Anspruch 1 mit einer Verstellung (27) für die Abstandseinstellung der beiden Gehrungsschnittsägen (19, 19'), dadurch gekennzeichnet, daß beim Erreichen der Fluchtung durch den Abstandsabgriff (32) eine optische und/oder akustische Anzeige ausgelöst wird.

3. Vorrichtung nach Anspruch 1, dadurch gekennzeichnet, daß für die Abstandseinstellung der beiden Gehrungsschnittsägen (19, 19') ein Stellmotor (27') vorgesehen ist, der bei Erreichung der Fluchtung durch den Abstandsabgriff (32) stillgesetzt wird.

4. Vorrichtung nach Anspruch 2 oder 3, dadurch gekennzeichnet, daß der Abstandsabgriff - (32) einen mit einem Mikroschalter zusammenwirkenden Anschlag (17) aufweist.

5. Vorrichtung nach Anspruch 4, dadurch gekennzeichnet, daß der Anschlag (17) entlang dem Plattenrand (5) der Platte (3) verschiebbar ist und eine messerkantenartige Fühlkante aufweist, die am Plattenrand (5) entlanggeführt wird, bis zum Abgriff der Eckkante (24') der Platte (3).

6. Vorrichtung nach einem der Ansprüche 1 bis 5, der mindestens eine der Gehrungsschnittsägen - (19, 19') auf einem parallel zum Auflagetisch (2) verschiebbaren Grundschlitten (25) angeordnet ist, wobei dieser Grundschlitten (25) über einen Antrieb (26, 26') vorzugsweise eine Gewindespindel (28) Zahnstange, Ketten-oder Seiltrieb verschiebbar ist, dadurch gekennzeichnet, daß der Grundschlitten - (25) auf zwei zwischen Trägerplatten (29, 29') angeordneten Führungsstangen (30) geführt ist.

7. Vorrichtung nach Anspruch 6, dadurch gekennzeichnet, daß auf dem Grundschlitten (25) ein senkrecht zum Auflagetisch (2) bzw. der Platte (3) über die Hubvorrichtung (22') bewegbarer Trägerschlitten .(21) vorgesehen ist, der die Gehrungsschnittsäge (19, 19') trägt.

8. Vorrichtung nach Anspruch 7, dadurch gekennzeichnet, daß der Trägerschlitten (21, 21') auf zwei Führungsstangen (20) vertikal verschiebbar geführt ist.

9. Vorrichtung nach einem der Ansprüche 1 bis 8, dadurch gekennzeichnet, daß eine vertikale Halteplatte (18) für einen, die erste Gehrungsschnittsäge (19) tragenden Trägerschlitten (21) vorgesehen ist.

10. Vorrichtung nach Anspruch 1, dadurch gekennzeichnet, daß die Einspannvorrichtung (7) für die einzupassende erste Randleiste (6) aus mindestens zwei Pratzen (12, 12', 12") besteht, durch die die einzupassende erste Randleiste (6) gegen jeweils den zugeordneten Anschlag (11, 11', 11") pressbar ist, wobei jeweils der Anschlag (11, 11', 11") und die Pratze (12, 12', 12") auf einer Konsole (8, 8', 8") angeordnet sind,. die auch jeweils eine Auflagfläche (9) für die erste Randleiste (6) aufweisen.

11. Vorrichtung nach Anspruch 10, dadurch gekennzeichnet, daß die zwei Pratzen (12, 12') und die sie tragenden Konsolen (8, 8') der Einspannvorrichtung (7) nahe bei den Eckkanten (24, 24') der Platte (3) vorgesehen sind und daß ggf. etwa in der Mitte dazwischen eine weitere Pratze (12") vorgesehen ist mit einem zu den beiden anderen Anschlägen (11, 11') fluchtenden weiteren Anschlag (11").

12. Vorrichtung nach Anspruch 11, dadurch gekennzeichnet, daß die weitere Pratze (12") mit dem weiteren Anschlag (11") und einer weiteren Auflagefläche (9) für die erste Randleiste (6) von einer Zwischenkonsole (8") getragen sind.

13. Vorrichtung nach Anspruch 12, dadurch gekennzeichnet, daß die Zwischenkonsole (8") abnehmbar auf den Führungsstangen (30) für den Grundschlitten (25) angeordnet ist.

14. Vorrichtung nach einem der Ansprüche 1 bis 13, dadurch gekennzeichnet, daß die beiden Gehrungsschnittsägen (19, 19') und deren Hubvorrichtung (22, 22') durch den Abstandsangriff (32) - schaltbar sind.

Fig. 1

0 236 870

Fig. 2

Fig. 3

Fig. 4

0 236 870

Fig. 5

0 236 870

Fig. 6

0 236 870